# EUROPÄISCHE PATENTSCHRIFT

(11) **EP 1 440 249 B1**
(45) Veröffentlichungstag und Bekanntmachung des Hinweises auf die Patenterteilung: **06.04.2005**
(21) Anmeldenummer: 02801876.0
(22) Anmeldetag: 01.10.2002
(51) Int. Cl.: F16D 65/52

(54) **SCHEIBENBREMSE MIT ELEKTROMOTORISCH BETÄTIGTEM NACHSTELLSYSTEM**
DISK BRAKE COMPRISING AN ELECTROMOTIVELY ACTUATED ADJUSTING SYSTEM
FREIN A DISQUE A SYSTEME DE RATTRAPAGE ACTIONNE PAR MOTEUR ELECTRIQUE

(30) Priorität: 23.10.2001 DE 10152248
(43) Veröffentlichungstag der Anmeldung: 28.07.2004
(73) Patentinhaber: KNORR-BREMSE SYSTEME FÜR NUTZFAHRZEUGE GMBH, 80809 München (DE)
(72) Erfinder: BAUMGARTNER, Johann, 85368 Moosburg (DE); BIEKER, Dieter, 83080 Oberaudorf (DE)
(74) Vertreter: Mattusch, Gundula
(86) Internationale Anmeldenummer: PCT/EP2002/010989
(87) Internationale Veröffentlichungsnummer: WO 2003/036122

(56) Entgegenhaltungen:
- DE-A- 3 716 202
- DE-A- 19 756 519
- DE-A- 19 835 550

## Beschreibung

Die Erfindung betrifft eine Scheibenbremse nach dem Oberbegriff des Anspruches 1.

Scheibenbremsen mit elektromotorisch betätigten Nachstellsystemen sind an sich bekannt, so z.B. aus der DE 197 56 519 A1. Bekannt ist femer eine mittige Anordnung des Nachstellantriebes zwischen den Dreh- oder Stellspindeln, so aus der DE 37 16 202 A1 oder der WO 99/05428.

Die Idee des elektrischen Nachstellmotors zum Antrieb der Nachstelleinrichtung (N) der Scheibenbremse hat sich an sich bewährt. Wünschenswert ist es aber, eine Scheibenbremse zu schaffen, bei welcher der Elektromotor einerseits besonders leicht zugänglich ist, um eine unkomplizierte Auswechslung des Elektromotors zu gewährleisten. Darüber hinaus soll der Elektromotor auch an einer relativ temperaturunempfindlichen Stelle der Scheibenbremse angeordnet werden, damit er bei Bremsungen nicht einer zu hohen Wärmeentwicklung ausgesetzt wird.

Die Lösung der vorstehenden Probleme ist die Aufgabe der Erfindung.

Die Erfindung löst diese Aufgabe durch den Gegenstand des Anspruches 1.

Anders als beim Stand der Technik ist/sind der wenigstens eine oder mehrere der Elektromotor(en) von außen zugänglich am Bremssattel angeordnet. Dieser Bereich der Scheibenbremse ist einer deutlich geringeren Wärmeentwicklung bei Bremsungen ausgesetzt als das Bremssattelinnere, wo über die Bremsbeläge Wärme auf die Elemente im Inneren des Bremssattels übertragen wird.

Darüber hinaus ist im äußeren Bereich des Bremssattels bzw. am Bremssatteläußeren eine besonders leichte Auswechselbarkeit des wenigstens einen Elektromotors realisierbar.

Der wenigstens eine Elektromotor ist über eine Antriebsverbindung mit wenigstens einer Nachstelleinrichtung innerhalb des Bremssattels gekoppelt, wobei die Antriebsverbindung als Welle ausgebildet ist.

Wenn der wenigstens eine Elektromotor ganz oder abschnittsweise in eine Ausnehmung an der Außenseite des Bremssattels eingreift, wird in einfacher Weise ein Schutz des Elektromotors gegen Witterungseinflüsse und Beschädigungen durch Steine und dgl. erreicht. Dieser Schutz kann durch eine Abdeckung ergänzt werden.

Wird das Nachstellsystem ein- oder beidseits der Bremsscheibe als vormontierbares Nachstellermodul ausgebildet, welches mindestens aufweist: die Antriebsverbindung zu dem Elektromotor, ein dem Elektromotor nachgeschaltetes Untersetzungsgetriebe, wobei an die wenigstens eine Montageplatte eine Nachstellhülse angesetzt ist, wird mit geringem Kostenaufwand eine leichte Vor- und Endmontage des Nachstellsystems realisierbar.

Die Erfindung eignet sich für Scheibenbremse elektromotorischer oder pneumatischer Betätigung sowie mit einem Schwimm-, Fest- oder Schiebesattel. Vorzugsweise ist auf beiden Seiten der Bremsscheibe jeweils eine der Nachstelleinrichtungen ausgebildet.

Weitere vorteilhafte Ausgestaltungen der Erfindung sind den Unteransprüchen zu entnehmen.

Nachfolgend werden bevorzugte Ausführungsbeispiele anband der Zeichnung näher beschrieben. Es zeigt:
- Figur 1: eine perspektivische Ansicht hier wesentlicher Elemente eines ersten Ausführungsbeispiels einer erfindungsgemäßen Scheibenbremse mit nur teilweise dargestelltem Bremssattel;
- Figur 2: einen Schnitt durch die Scheibenbremse der Figur 1,
- Figur 3: eine Draufsicht auf die Scheibenbremse der Figur 1, wobei nur ein Teil des Bremssattels dargestellt ist;
- Figur 4: eine perspektivische Ansicht des Nachstellsystems der Scheibenbremse aus Figur 1 nebst einem Teil des Drehhebels;
- Figur 5: eine Draufsicht auf das Nachstellsystem aus Figur 4;

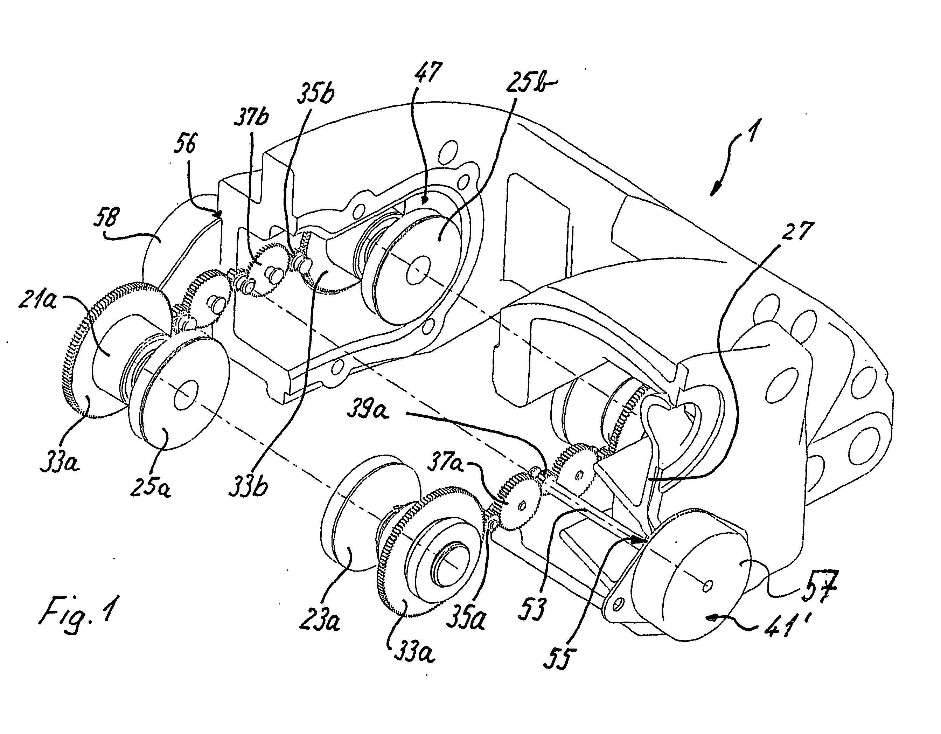

- Figur 1: eine perspektivische Ansicht hier wesentlicher Elemente eines weiteren Ausführungsbeispiels einer erfindungsgemäßen Scheibenbremse mit nur teilweise dargestelltem Bremssattel;

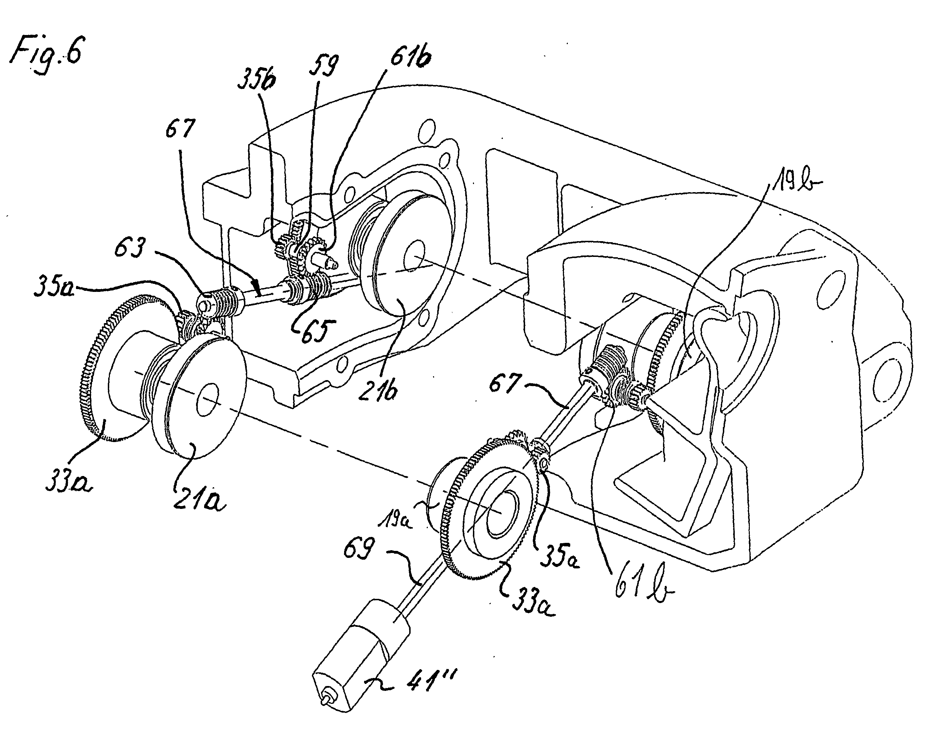

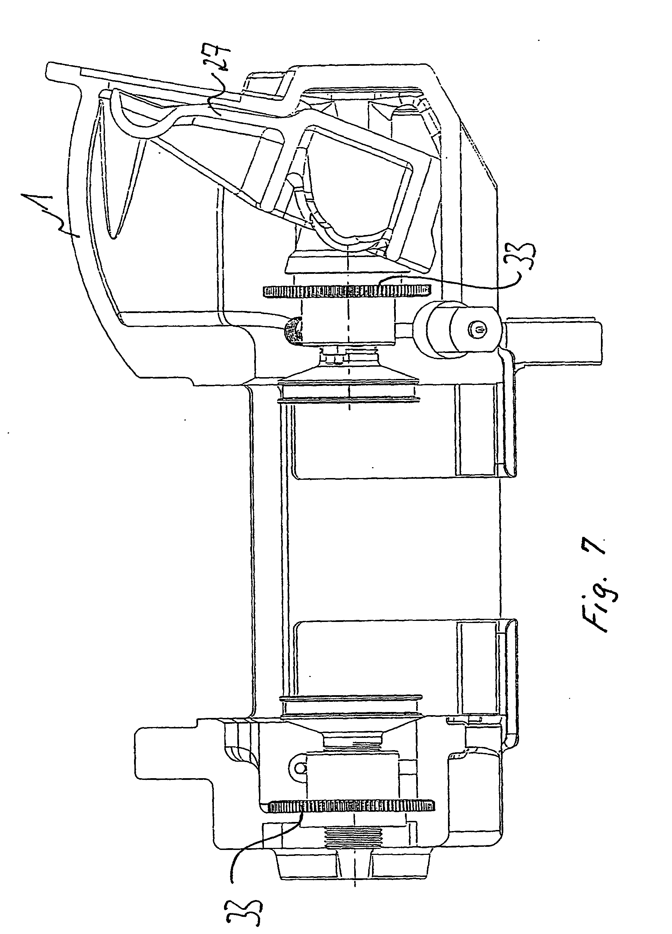

- Figur 7: einen Schnitt durch die Scheibenbremse der Figur 6;

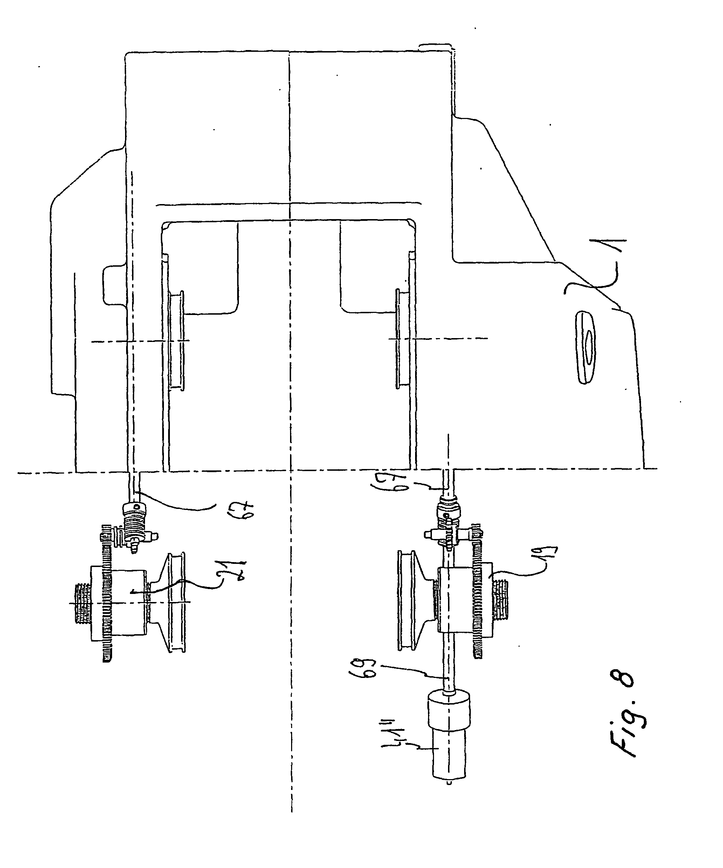

- Figur 8: eine Draufsicht auf die Scheibenbremse aus Figur 7, wobei nur ein Teil des Bremssattels dargestellt ist;

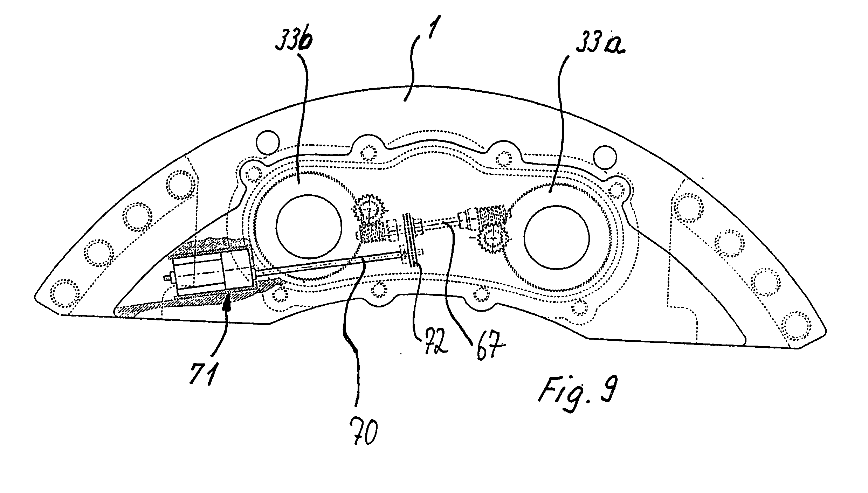

- Figur 9: eine teilweise transparent dargestellte weitere Scheibenbremse;

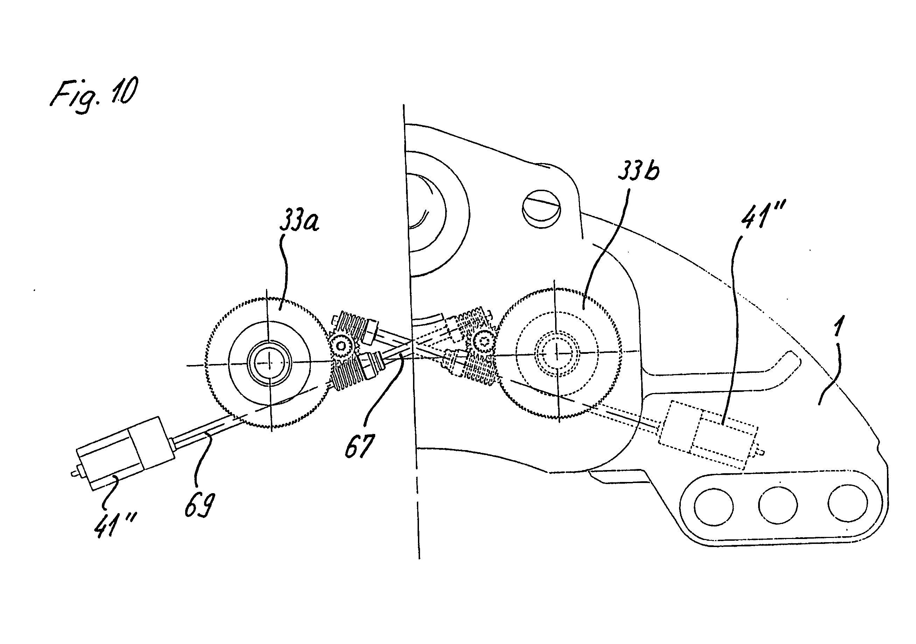

- Figur 10: eine weitere teilgeschnittene und teilperspektivische Ansicht der Scheibenbremse aus Figur 6;

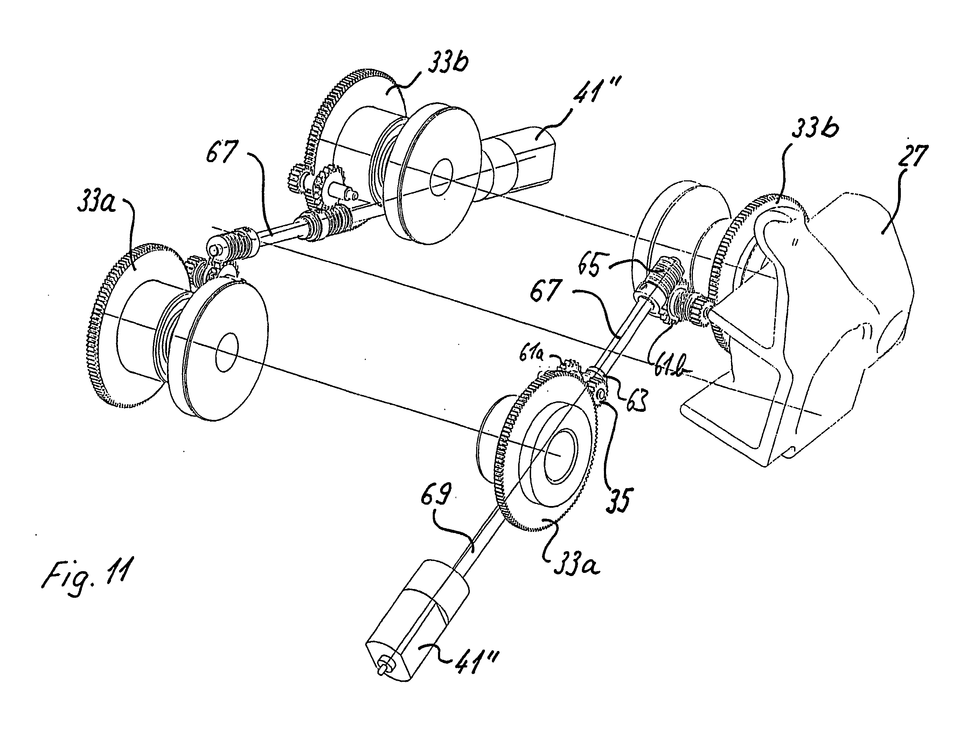

- Figur 11: eine perspektivische Ansicht des Nachstellsystems der Scheibenbremse aus Figur 6 mit teilweise dargestelltem Drehhebel;

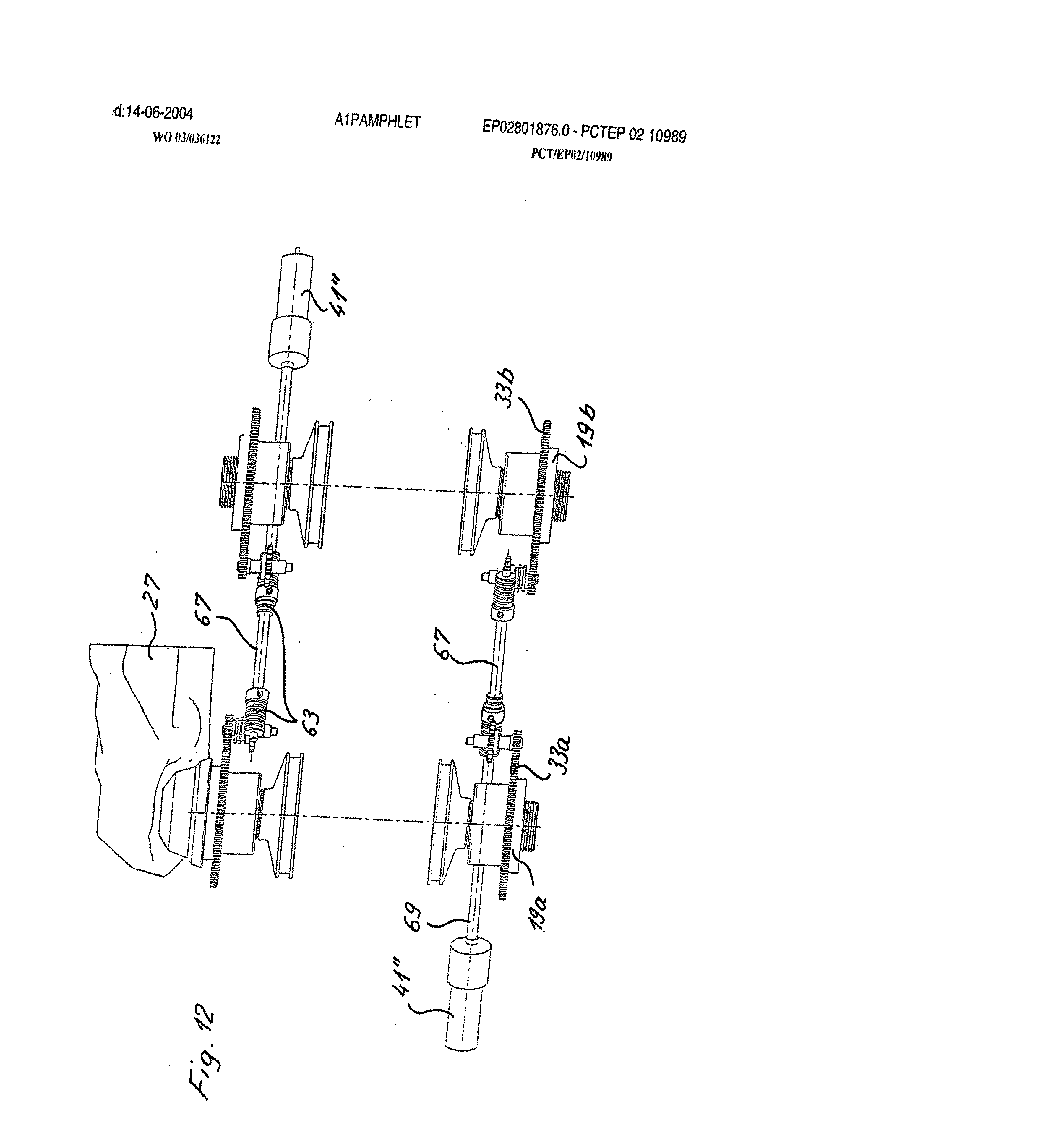

- Figur 12: eine Draufsicht auf das Nachstellsystem mit Drehhebel nach Figur 11;

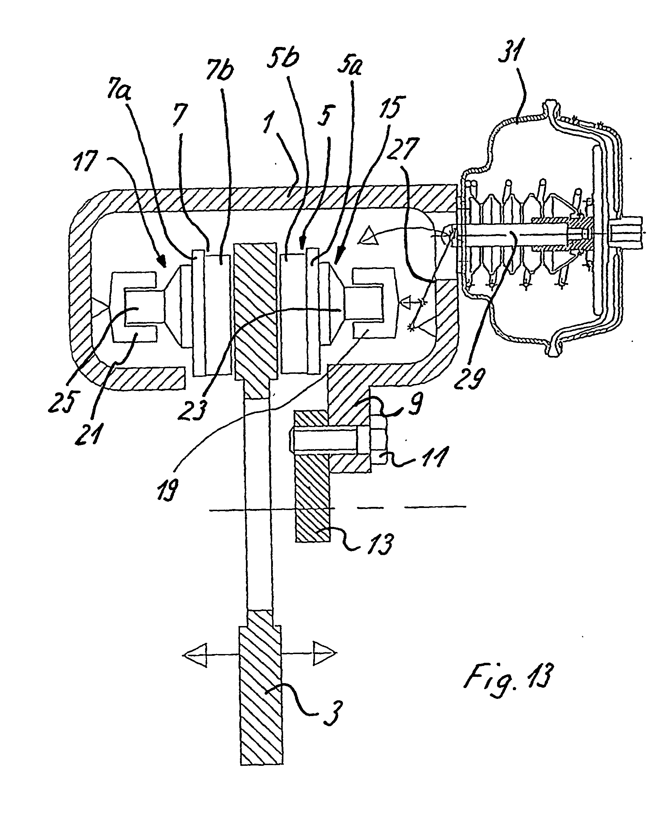

- Figur 13: eine Prinzipskizze einer Scheibenbremse;

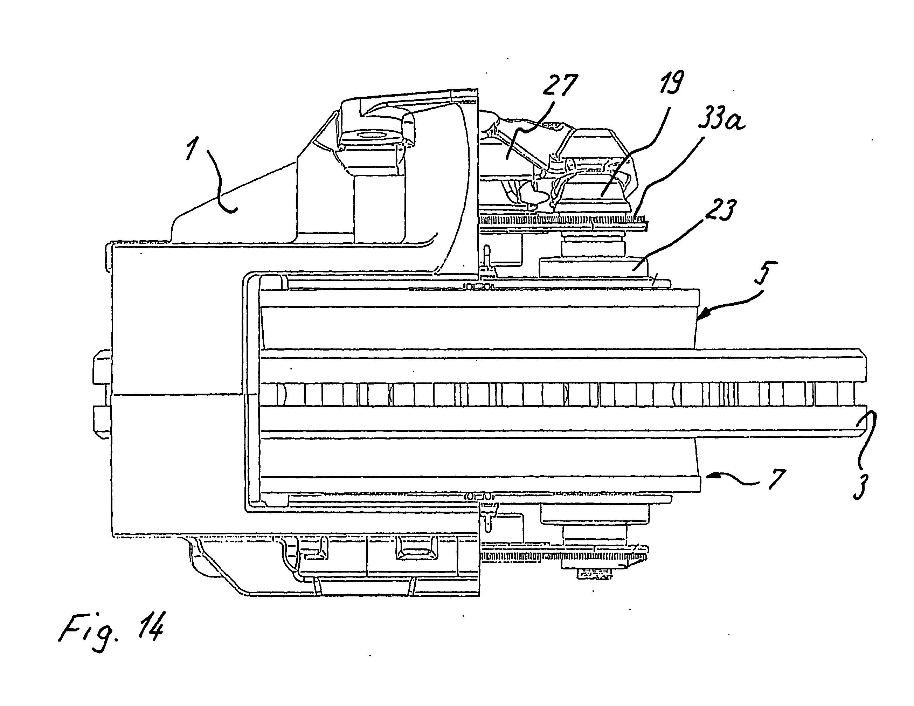

- Figur 14: eine teilgeschnittene Draufsicht auf eine Scheibenbremse, welche mit einem Elektromotor nach Art der Figur 1 versehbar ist;

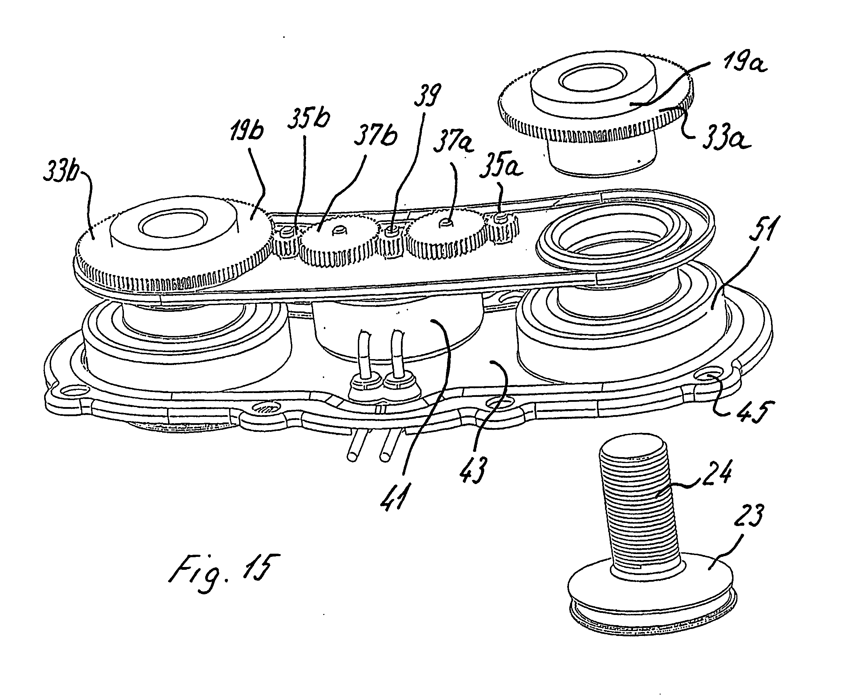

- Figur 15: eine Ansicht eines Nachstellmoduls.

Figur 13 zeigt eine vorzugsweise pneumatisch oder elektromotorisch betätigbare Scheibenbremse, die einen Bremssattel 1 aufweist, der eine Bremsscheibe 3 in ihrem oberen Umfangsbereich umfasst.

Beidseits der Bremsscheibe 3 sind in Richtung der Bremsscheibe und von dieser weg - d.h. senkrecht zur Ebene der Bremsscheibe 3 - verschiebliche Bremsbeläge 5, 7 angeordnet, die in üblicher Weise aus einem Bremsbelagträger 5a, 7a und einem darauf aufgebrachten Belagmaterial Sb, 7b bestehen.

Der Bremssattel 1 ist in Figur 13 im rechten unteren Abschnitt 9, der sich in Richtung der - hier nicht dargestellten - Welle erstreckt, mittels mindestens eines oder vorzugsweise mehrerer Bolzen 11 beispielhaft an einem Achsflansch 13 der Scheiben- bremse befestigt.

Die Bremsscheibe 3 ist hier beispielhaft als Schiebescheibe ausgebildet, welche um den Betrag des bei Bremsungen zu überwindenden Arbeitshubes relativ zum Bremssattel 1 auf der Radachse verschieblich ist. Alternativ oder ergänzend könnte auch der Bremssattel 1 verschieb- oder verschwenkbar ausgebildet sein. Es wäre ferner denkbar, dass der Bremssattel 1 und/oder die Bremsscheibe 3 jeweils um einen Teil des Weges des Arbeitshubes elastisch verformbar ausgebildet sind.

Da nach Fig. 1 eine Relativbeweglichkeit zwischen Bremssattel und Bremsscheibe gegeben ist, welche im wesentlichen dem Betrag des Arbeitshubes entspricht, sind beidseits der Bremsscheibe Nachstelleinrichtungen 15, 17 zum Ausgleich des Lüftspiels bzw. des bei Bremsungen entstehenden Bremsbelagverschteißes vorgesehen und notwendig.

Die Nachstelleinrichtungen 15, 17 bestehen hier auf jeder Seite der Bremsscheibe beispielhaft aus jeweils wenigstens einer oder mehr, bevorzugt zwei Nachstellhülsen 19, 21, in welchen bolzenartige Ansätze 24 von Druckstücken 23, 25 verdrehbar angeordnet sind, so dass eine relative axiale Beweglichkeit zwischen den Nachstellhülsen 21, 23 sowie den Druckstücken 23,25 gegeben ist. Selbstverständlich ist auch eine umgekehrte Anordnung denkbar, bei der die Druckstücke einen - hier nicht dargestellten - hülsenartigen Ansatz aufweisen, der auf einem Bolzen verdrehbar ist.

Die in Figur 13 rechts dargestellte Nachstelleinrichtung 15 stützt sich an einem neben der Nachstelleinrichtung 15 zur Zuspanneinrichtung gehörigen Drehhebel 27 ab, welcher in seinem in Figur 13 oberen Bereich von einer Kolbenstange 29 eines Bremszylinders 31 betätigbar ist und der in seinem unteren Teil beispielsweise über (hier nicht dargestellte) Kugelelemente oder eine sonstige Lagerung am Bremssattel gelagert ist, wobei er ferner an seiner vom Bremssattel ab gewandten Seite an der Nachstellhülse 19 direkt oder über Zwischenelemente wie Kugeln und/oder weitere Zwischenstücke gelagert ist. Die auf der dem Drehhebel 27 gegenüberliegenden Seite der Bremsscheibe 1 angeordnete Nachstellhülse 21 ist dagegen direkt am Bremssattelinneren abgestützt.

Figur 14 zeigt eine Draufsicht auf eine Scheibenbremse nach Art der Figur 13, wobei jeweils beidseits der Bremsscheibe zwei Nachstellhülsen 19a, 19b (siehe auch Fig. 15) sowie zwei Druckstücke 23a, 23b, 25a, 25b angeordnet sind, welche über einen Zahnradmechanismus miteinander synchronisierbar sind. Dies ist auch besonders gut aus Figur 15 zu erkennen. Die hier dargestellten Nachstellhülsen 19a ist an ihrem äußeren Umfang mit einem Zahnrad 33a oder einem zahnradartigen Ansatz versehen, das mit einem Zahnrad 35a kämmt, welches wiederum von einem Zahnrad 37a angetrieben wird, das seinerseits von einem Abtriebszahnrad 39 eines Elektromotors 41 gedreht wird. Sämtliche Zahnräder 33a, 35a, 37a, 39 liegen in einer Ebene.

Analog dazu ist die weitere Nachstellhülse 19b -siehe Fig. 15 -ebenfalls mit einer Verzahnung oder einem Zahnrad 33b an ihrem Außenumfang versehen, welches mit einem weiteren Zahnrad 3 Sb kämmt, das seinerseits von einem Zahnrad 37b gedreht wird, das ebenfalls von Abtriebszahnrad 39 des Elektromotors 41 angetrieben wird.

Die Zahnräder 37a, 37b sind dabei an einander gegenüberliegenden Seiten des Abtriebszahnrades 39 angesetzt. Sämtliche Zahnräder 33 bis 39 sind mit ihren Achsen auf einer Montageplatte 42 angebracht, die Ausnehmungen für die Achsen der Zahnräder sowie für den Durchgriff der Nachstellhülsen 19a, 19b aufweist.

Auf der den Zahnrädern 33 bis 39 gegenüberliegenden Seite der Montageplatte 42 ist mittig zwischen den beiden Nachstellhülsen 19, 21 ein Elektromotor angeordnet. Die Nachstellhülsen 19 durchgreifen in ihrem von den Zahnrädern 33 ab gewandten Bereich Ausprägungen und Öffnungen einer weiteren parallel zur ersten Montageplatte 42 angeordneten zweiten Montageplatte 43, welche Bohrungen 45 zur Verschraubung am Bremssattel I aufweist, so dass die zweite Montageplatte 43 auch als Verschlussplatte für eine -beispielsweise in Figur 1 zu erkennende der Bremsscheibe zugewandte Öffnung 47 des Bremssattels 1 dient, der mit Bohrungen 49 versehen ist, die mit den Bohrungen 45 korrespondieren.

In die zweite Montageplatte 43 sind jeweils die Druckstücke 23, 25 eingesetzt, wobei Ausprägungen 51 in der zweiten Montageplatte 43 zur Aufnahme der auf die Bremsbeläge einwirkenden Enden der Druckstücke 23, 25 ausgelegt sind.

Nach Figur 15 wird ein konstruktiv einfaches, vormontierbares Nachstellmodul geschaffen, welches beidseits der Bremsscheibe 3 vormontiert in den Bremssattel einsetzbar ist, nachdem der Drehhebel 27 im Bremssattel montiert wurde.

Diese Anordnung ist kostengünstig und kompakt. Dennoch besteht Bedarf nach einer alternativen Unterbringung des Elektromotors 41, welcher im Bereich zwischen den Druckstücken 23,25 einer relativ starken Erwärmung ausgesetzt ist.

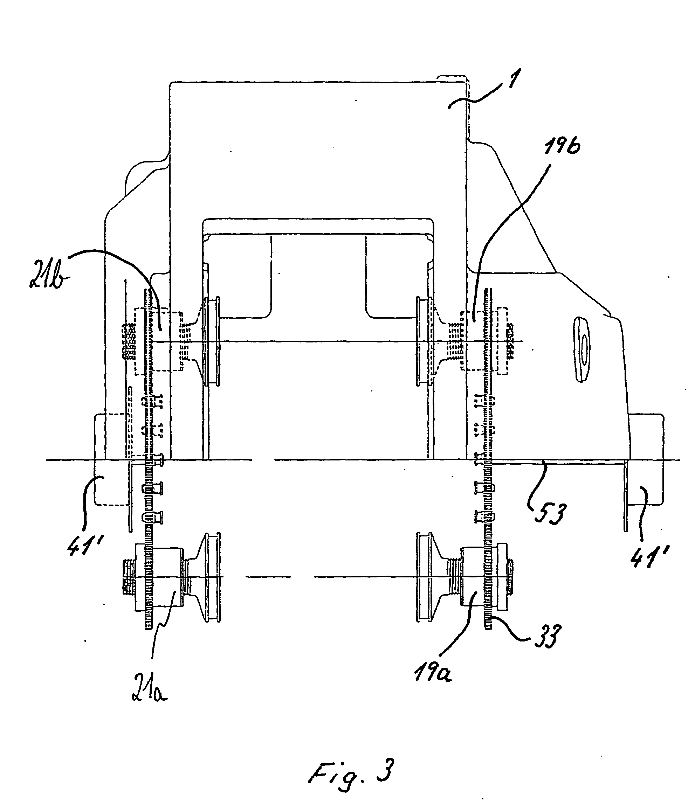

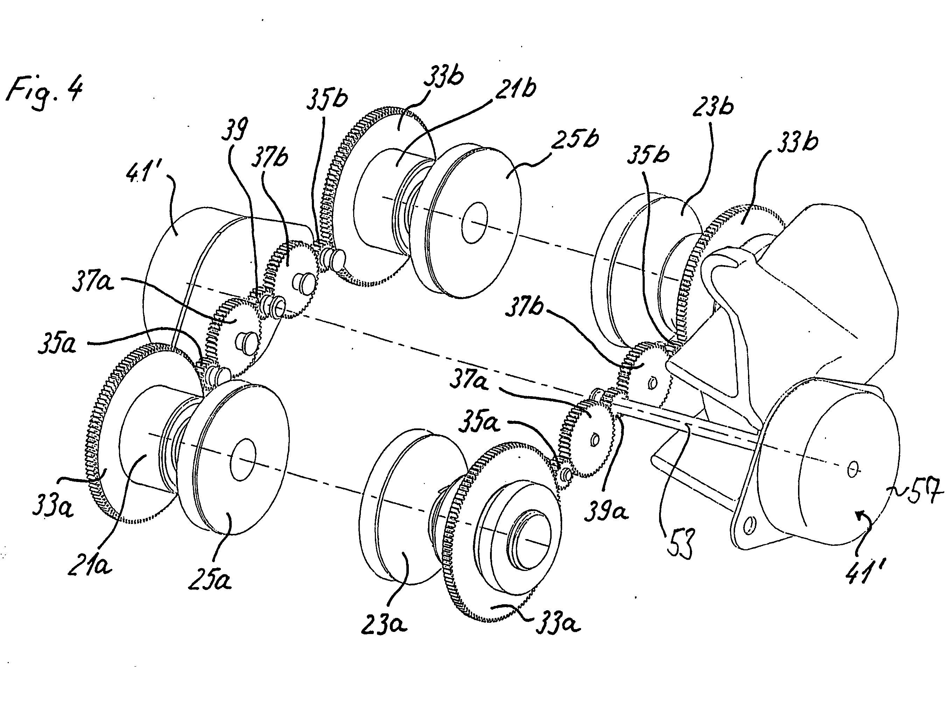

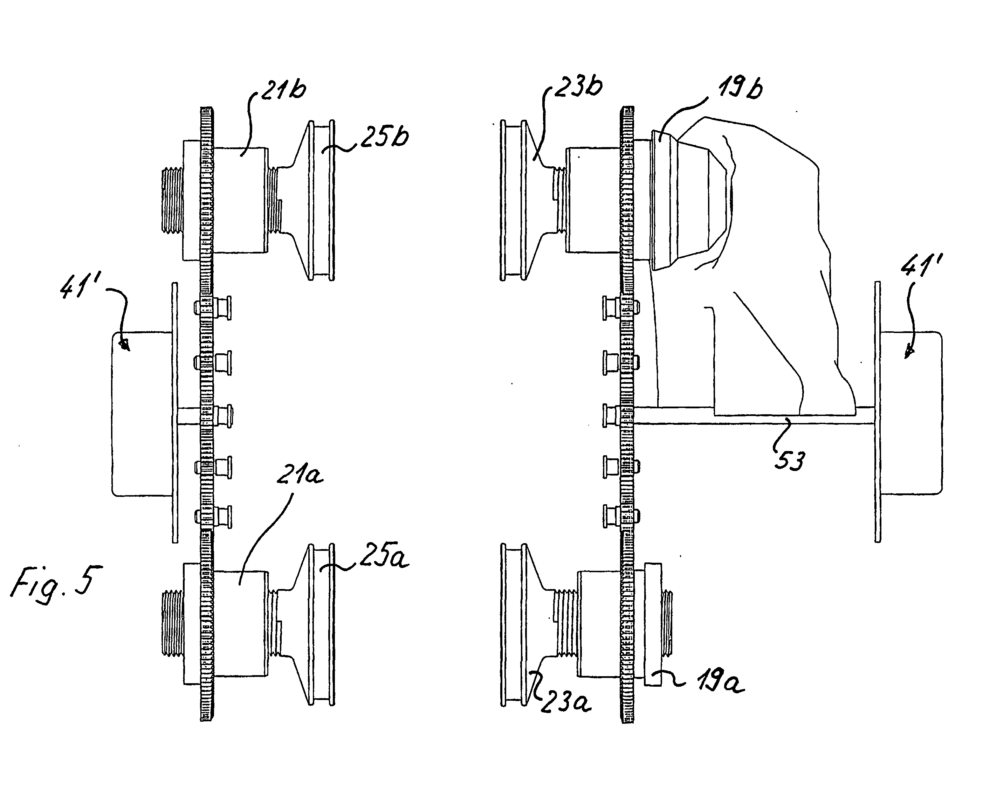

Zur Vermeidung dieses Problems ist es nach Figur 1 vorgesehen, die Elektromotoren 41' beidseits der Bremsscheibe nicht mehr zwischen den bei den Montageplatten 42, 43 anzuordnen, sondern das Abtriebszahnrad 39 jeweils über eine Antriebsverbindung - hier eine in Achsrichtung der Achse des Zahnrades 39 verlängerte Welle 53 - mit einem Elektromotor 41' zu verbinden, welcher von außen zugänglich am Bremssattel angeordnet ist. Nach Figur 1 bis 5 ist die Welle 53 jeweils in Verlängerung der Welle des Zahnrades 39 senkrecht durch den Bremssattel nach außen geführt, wobei auch der Drehhebel27 eine Bohrung 55 aufweist, um die Welle 53 nach außen führen zu können. Auch der Bremssattel weist jeweils beidseits der Bremsscheibe entsprechende Bohrungen zum Durchführen der Welle auf, die in Figur 1 allerdings nicht zu erkennen sind.

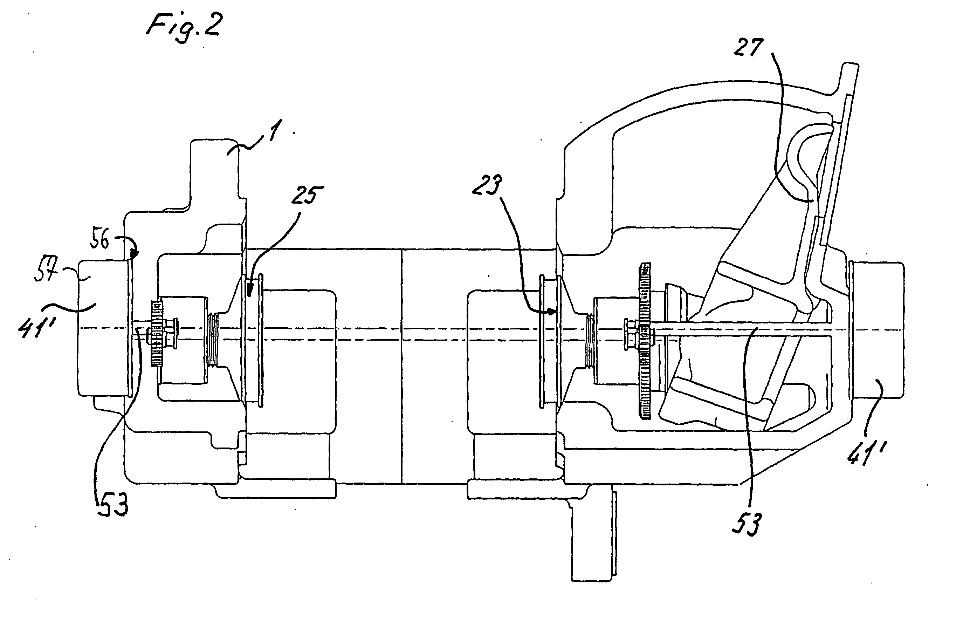

Vorzugsweise kann der Bremssattel 1 an seinen Außenseiten mit Ausnehmungen 56 (in Figur 2 im linken Rand zu erkennen) versehen sein, damit der Elektromotor 41' in den Bremssattel eingreift. Der Elektromotor 41' selbst kann eine robuste Abdeckung 57 aufweisen, so dass er gegen rauhe Umwelteinflüsse sicher geschützt ist.

Der große Vorteil dieser Anordnung liegt einerseits in der leichten Zugänglichkeit des Elektromotors 41' und damit der einfachen Möglichkeit zum Austausch desselben. Andererseits ist an den Außenseiten des Bremssattels 1 eine niedrigere Temperatur bei Bremsungen gegeben als im Bremssattelinneren, so dass der Elektromotor 41' im Vergleich zum Stand der Technik nach der Erfindung weniger stark bei Bremsungen erwärmt wird,

Bei den weiteren Ausführungsbeispielen der Figur 6 bis 12 ist vorgesehen, dass die beiden Zahnräder bzw. zahnradartigen Ansätze 33a, b am Außenumfang der Nachstellhülsen 19, 21 wiederum jeweils mit Zahnrädern 35a, b kämmen, die jedoch auf eine Welle 59 aufgesetzt sind, welche parallel versetzt zu den Zahnrädern 35 weitere Zahnräder 61 a, b trägt, welche mit Schneckenrädern 63,65 kämmen, welche auf eine gemeinsame Welle 67 aufgebracht sind, welche die beiden Schneckenräder 63,65 miteinander verbindet.

Dabei ist auf der Seite des Drehhebels 27 eine diagonale Ausrichtung derart gegeben, dass die Weile 67 relativ zur Draufsicht auf die Scheibenbremse jeweils bei der einen Nachstellhülse 19a einmal am unteren Umfang des Zahnrades 61 a und bei der weiteren Nachstellhülse 19b im oberen Umfang des Zahnrades 61 b angreift. Auf der gegen- überliegende Seite der Bremsscheibe ist der Eingriff der Welle 67 in die Zahnräder 61 a, b umgekehrt, d.h., dass die Welle 67 relativ zur Draufsicht auf die Scheibenbremse jeweils bei der einen Nachstellhülse 19b einmal am unteren Umfang des Zahnrades 61 b und bei der weiteren Nachstellhülse 19a im oberen Umfang des Zahnrades 61 a angreift.

Wie besonders gut in Figur 6 zu erkennen, ist die Welle 67 jeweils derart lang ausgebildet, dass durch eine Wellenverlängerung 69 der Welle 67 beidseits der Bremsscheibe 3 wiederum jeweils eine die Bremssattelwandung durchsetzende Antriebsverbindung zu jeweils einem der Elektromotoren 41" gebildet wird, die wiederum außen am Bremssattel angeordnet sind.

Wie besonders gut in Figur 9 zu erkennen, liegt der Elektromotor 41 " beispielsweise in einer Ausnehmung 71 des Bremssattels, wo er wiederum gut gegen höhere, durch Bremsung verursachte Temperaturen geschützt und leicht auswechselbar ist. Nach Figur 9 ist anstelle einer Achsverlängerung 69 eine separate Antriebswelle 70 vorgesehen, welche über ein Zahnrad 72 mit der Welle 67 gekoppelt ist.

Sowohl nach den Figuren 1 bis 5 als auch nach den Figuren 6 bis 12 ist beidseits der Bremsscheibe 3 jeweils eine der Nachstelleinrichtungen 15, 17 vorgesehen, die jeweils einen der Elektromotore 41' bzw. 41 " aufweisen und die jeweils an der Außenseite des Bremssattels 1 relativ zu den übrigen Komponenten der Nachstelleinrichtungen 15, 17 angeordnet und über den Bremssattel durchgreifende Bohrungen oder dgl. mit den Komponenten der Nachstelleinrichtungen 15, 17 im Bremssattelinneren verbunden sind.

### Bezugszeichenliste

- Bremssattel: 1
- Bremsscheibe: 3
- Bremsbelag: 5
- Bremsbelagträger: 5a / 5b
- Bremsbelag: 7
- Bremsbelagträger: 7a / 7b
- Abschnitt: 9
- Bolzen: 11
- Achsflansch: 13
- Nachstelleinrichtung: 15
- Nachstelleinrichtung: 17
- Nachstellhülse: 19
- Nachstellhülse: 19a / 19b
- Nachstellhülse: 21
- Druckstück: 23
- Druckstück: 23a / 23b
- Ansatz: 24
- Druckstück: 25
- Druckstück: 25a / 25b
- Drehhebel: 27
- Kolbenstange: 29
- Zahnrad / Ansatz: 33
- Zahnrad: 35
- Zahnrad: 37
- Zahnrad: 39
- Elektromotor: 41/41'/41"
- Montageplatte: 42
- Montageplatte: 43
- Bohrung: 45
- Öffnung: 47
- Bohrung: 49
- Ausprägung: 51
- Welle: 53
- Bohrung: 55
- Einprägung: 56
- Abdeckung: 57
- Welle: 59
- Zahnrad: 61
- Zahnrad: 61 a / 61 b
- Schneckenrad: 63
- Schneckenrad: 65
- Welle: 67
- Achsverlängerung: 69
- Ausnehmung: 71
- Zahnrad: 72

## Patentansprüche

1. Pneumatisch betätigbare Scheibenbremse für Nutzfahrzeuge mit
a) einem eine Bremsscheibe (3) übergreifenden Bremssattel (1),
b) einer Zuspanneinrichtung zum Zuspannen der Scheibenbremse, die einen Drehhebel (27) aufweist,
c) sowie einem Nachstellsystem zum Ausgleich von Bremsbelag- und/oder - scheibenverschleiß,
d) wobei das Nachstellsystem wenigstens einen Elektromotor (41) als Antrieb aufweist,
**dadurch gekennzeichnet, daß**
e) der wenigstens eine oder mehrere der Elektromotor(en) (41', 41 ") von außen zugänglich am Bremssattel (1) angeordnet ist/sind,
f) der wenigstens einen Elektromotor (41.41") über eine Antriebsverbindung mit wenigstens einer der Nachstelleinrichtungen (15, 17) innerhalb des Bremssattels gekoppelt ist
g) wobei die Antriebsverbindung als eine die Bremssattelwandung durchsetzende Welle (53, 59, 67) dazu ausgebildet ist,
h) wobei der Drehhebel (27) eine Bohrung (55) aufweist, durch welche die Welle (53) nach außen geführt ist.

2. Scheibenbremse nach Anspruch 1, **dadurch gekennzeichnet, daß** der wenigstens eine Elektromotor (41', 41") ganz oder Abschnittsweise in eine Ausnehmung (56) an der Außenseite des Bremssattels (1) eingreift.

3. Scheibenbremse nach Anspruch 1 oder 2, **dadurch gekennzeichnet, daß** der wenigstens eine Elektromotor (41', 41") mit einer Abdeckung (57) versehen ist.

4. Scheibenbremse nach einem der vorstehenden Ansprüche, **dadurch gekennzeichnet, daß** die Antriebsverbindung ein Zahnrad (39) oder ein oder mehrere Schneckenräder (63) aufweist, welche direkt oder über weitere zwischengeschaltete Antriebselemente, insbesondere Zahnräder (33-37, 61), mit den Druckstücken (23, 25) und/oder Nachstellhülsen (19, 21) kämmen.

5. Scheibenbremse nach einem der vorstehenden Ansprüche, **dadurch gekennzeichnet, daß** beidseits der Bremsscheibe jeweils eine der Nachstelleinrichtungen (15, 17) angeordnet ist, wobei die Elektromotoren (41', 41 ") beidseits der Bremsscheibe jeweils auf ein die Drehbewegungen von zwei oder mehr Druckstücken koppelndes Synchronisationsgetriebe einwirken.

6. Scheibenbremse nach einem vorstehenden Ansprüche, **dadurch gekennzeichnet, daß** das Nachstellsystem ein- oder beidseits der Bremsscheibe als vormontierbares Nachstellermodul (50, 100) ausgebildet ist, welches mindestens aufweist:
- die Antriebsverbindung zu dem Elektromotor (41', 41"),
- ein dem Elektromotor nachgeschaltetes Untersetzungsgetriebe,
- wobei an die wenigstens eine Montageplatte (42, 43) eine Nachstellhülse (19, 21) angesetzt ist.

7. Scheibenbremse nach einem vorstehenden Ansprüche, **dadurch gekennzeichnet, daß** die Scheibenbremse einen Schwimm-, Fest- oder Schiebesattel aufweist.

## Claims

1. Pneumatically actuated disc brake for goods vehicles, with
a) a brake caliper (1) which overlaps a brake disc (3),
b) a brake applicator mechanism for applying the disc brake, which comprises a rotary lever (27),
c) and an adjustment system to compensate wear of the brake lining or brake disc,
d) the said adjustment system comprising at least one electric motor (41) as its drive,
**characterised in that**
e) the at least one or more electric motor(s) (41', 41") is/are accessible from outside on the brake caliper (1),
f) the at least one electric motor (41, 41") is coupled via a drive connection with at least one of the adjustment devices (15, 17) inside the brake caliper,
g) the drive connection being formed for that purpose as a shaft (53, 59, 67) which passes through the wall of the brake caliper,
h) and the rotary level (27) having a bore (55) through which the shaft (53) passes to the outside.

2. Disc brake according to Claim 1,
**characterised in that**
the at least one electric motor (41', 41") engages completely or in a section in a recess (56) on the outside of the brake caliper (1).

3. Disc brake according to Claims 1 or 2,
**characterised in that**
the at least one electric motor (41', 41") is provided with a cover (57).

4. Disc brake according to any of the preceding claims,
**characterised in that**
the drive connection comprises a gearwheel (39) or one or more worm gears (63), which mesh with the pressure elements (23, 25) and/or adjustment sleeves (19, 21) directly or via further interposed drive elements, in particular gearwheels (33-37, 61).

5. Disc brake according to any of the preceding claims,
**characterised in that**
on both sides of the brake disc, in each case one of the adjustment devices (15, 17) is arranged, such that the electric motors (41', 41") act on both sides of the make disc, respectively on a synchronisation gear which couples the rotation movements of two or more pressure elements.

6. Disc brake according to any of the preceding claims,
**characterised in that**
the adjustment system on one or both sides of the brake disc is made as a preassembled adjustment module (50, 100), which comprises at least:
- the drive connection to the electric motor (41', 41"),
- a reduction gear positioned after the electric motor,
- such that an adjustment sleeve (19, 21) is attached on the at least one mounting plate (42,43).

7. Disc brake according to any of the preceding claims,
**characterised in that**
the disc brake comprises a floating, fixed or sliding caliper.

## Revendications

1. Frein à disque à actionnement pneumatique pour véhicules utilitaires, comprenant
a) un étrier (1) de frein recouvrant un disque (3) de frein,
b) un dispositif d'application pour appliquer le frein à disque, dispositif qui comporte un levier (27) rotatif,
c) ainsi qu'un système de rattrapage pour compenser l'usure des garnitures de frein et/ou des disques de frein,
d) le système de rattrapage comportant au moins un moteur (41) électrique comme entraînement,
**caractérisé en ce que**
e) le moteur (41', 41") électrique ou plusieurs des moteurs (41', 41") électriques est/sont disposé(s) sur l'étrier (1) de frein en étant accessibles de l'extérieur,
f) le moteur (41', 41") électrique au moins unique est couplé par l'intermédiaire d'une liaison d'entraînement à au moins un des dispositifs (15, 17) de rattrapage à l'intérieur de l'étrier de frein,
g) la liaison d'entraînement étant réalisée à cet effet sous la forme d'un arbre (53, 59, 67) traversant la paroi de l'étrier de frein,
h) le levier (27) rotatif comportant un perçage (55) par lequel l'arbre (53) passe à l'extérieur.

2. Frein à disque suivant la revendication 1, **caractérisé en ce que** le moteur (41', 41") électrique pénètre en totalité ou en partie dans un évidement (56) sur le côté extérieur de l'étrier (1 ) de frein.

3. Frein à disque suivant la revendication 1 ou 2, **caractérisé en ce que** le moteur (41', 41") électrique au moins unique est pourvu d'un élément (57) de recouvrement.

4. Frein à disque suivant l'une des revendications précédentes, **caractérisé en ce que** la liaison d'entraînement comporte une roue (39) dentée ou une ou plusieurs roues (63) à vis, qui engrènent directement ou par l'intermédiaire d'éléments d'entraînement supplémentaires intercalés, notamment de roues (33-37, 61) dentées, avec les éléments (23, 25) de pression et/ou des douilles (19, 21) de rattrapage.

5. Frein à disque suivant l'une des revendications précédentes, **caractérisé en ce qu'**un dispositif (15, 17) de rattrapage respectif est disposé de part et d'autre du disque de frein, les moteurs (41', 41") électriques agissant respectivement, de part et d'autre du disque de frein, sur une transmission de synchronisation couplant les mouvements de rotation de deux ou plusieurs éléments de pression.

6. Frein à disque suivant l'une des revendications précédentes, **caractérisé en ce que** le système de rattrapage, d'un côté ou des deux côtés du disque de frein, est réalisé sous forme de module (50, 100) de rattrapage pouvant être pré-assemblé, qui comprend au moins :
- la liaison d'entraînement vers le moteur (41', 41 ") électrique,
- une transmission démultiplicatrice montée à la suite du moteur électrique,
- sachant qu'une douille (19, 21) de rattrapage est rapportée sur la au moins une plaque (42, 43) de montage.

7. Frein à disque suivant l'une des revendications précédentes, **caractérisé en ce que** le frein à disque comprend un étrier flottant, un étrier fixe ou un étrier coulissant.
